# EUROPÄISCHE PATENTANMELDUNG

(11) **EP 2 436 259 A1**
(43) Veröffentlichungstag der Anmeldung: **04.04.2012**
(21) Anmeldenummer: 11001673.0
(22) Anmeldetag: 01.03.2011
(51) Int. Cl.: A01D 43/10

(54) **Aufbereitungseinrichtung mit elektronischer Steuereinrichtung für eine landwirtschaftliche Arbeitsmaschine**

(30) Priorität: 01.10.2010 DE 102010047072
(71) Anmelder: CLAAS Saulgau GmbH, 88348 Bad Saulgau (DE)
(72) Erfinder: Birkhofer, Stefan, 78333 Srockach (DE); Blaschke, Tobias, 59192 Bergkamen (DE)

(57) **Zusammenfassung**

Es wird eine Aufbereitungseinrichtung für eine landwirtschaftliche Bearbeitungsmaschine, insbesondere eines Mähwerkes (1) vorgeschlagen, die es ermöglicht unter Abwägung einer Vielzahl von Parametern, wie zum Bsp. den Eigenschaften des Mähgutes und der äußeren Bedingungen, eine den Anforderungen optimierte Einstellung des Schneidwerkes zu ermöglichen.

## Beschreibung

Die Erfindung betrifft eine Aufbereitungseinrichtung für eine landwirtschaftliche Bearbeitungsmaschine, insbesondere eines Mähwerkes, nach dem Oberbegriff des Anspruches 1

### Stand der Technik

Bekannt sind solche Aufbereitungseinrichtungen für Scheibenmähwerke oder Trommelmähwerke, die dem Rotationsmähwerk jeweils unmittelbar in Richtung des Erntegutstromes nachgeschaltet sind.

Die Aufbereitungseinrichtung besteht aus einer waagrecht ausgerichteten Aufbereitungstrommel oder Walze als Bearbeitungsteil, die über den größten Teil der Arbeitsbreite des Mähwerkes reicht und aus einer oberhalb von dieser angeordneten, gelenkig gelagerten und in verschiedenen Stellungen einstellbaren Klappe oder einem Kamm als Zustellteil, mit dessen Verstellung ein Durchtrittspalt zwischen diesem und dem Bearbeitungsteil nach dem verlangten Aufschlussgrad und nach der Durchsatzleistung des Erntegutes fest eingestellt werden kann oder aus einer unteren, ortsfest gelagerten, waagrecht ausgerichteten Walze als Bearbeitungsteil und einer oberhalb von dieser angeordneten, im Abstand zustellbaren, parallelen Walze als Verstellteil, die an Lenkern verschwenkbar oder in Schiebelagern verschiebbar angeordnet ist.

Dabei kann eine Federung die Einstellung der Klappe oder der Walze über einen vorbestimmten Weg variabel gestalten und bei Anwendung einer Walze als Zustellteil können die Walzen in der Grundstellung aufeinander- oder ineinanderlaufen und dabei einen Mindestdruck auf das durchgesetzte Erntegut ausüben.

Diese Aufbereitungseinrichtungen werden an heck- oder frontangebauten oder an gezogenen Rotationsmähwerken, aber auch an Maschinen, die nur der Aufbereitung von gemähtem und auf dem Boden abgelegtem Erntegut dienen, angewandt Nachteilig bei diesen Aufbereitungsvorrichtungen ist es, dass der Aufbereitungsgrad des Erntegutes nach der Art und der Durchsatzmenge des Erntegutes, nach der Drehzahl und nach der auf das Gut ausgeübten Kraft außerordentlich schwankend ist und durch steuernde Maßnahmen des Bedienpersonals des Zugfahrzeuges nicht oder nur sehr ungenügend ausgeglichen werden kann.

Dazu kommt, dass die Menge an durchgesetztem Erntegut starken Schwankungen unterliegen kann und das beim Anfahren der Maschine an Schlagenden die erforderliche Drehzahl der Aufbereitungseinrichtung zumeist nicht schnell genug erreicht wird, so dass Störungen, wie Verstopfungen der Maschine die Folge sein können.

### Aufgabenstellung

Aufgabe der Erfindung ist es demnach, bei einer Aufbereitungseinrichtung für ein Rotationsmähwerk die Steuerungseinrichtung als autarke Steuerung auszubilden, bei der durch Anwendung geeigneter Vorrichtungen und kontinuierlich ermittelter Kennzahlen stets ein gleichbleibender Aufbereitungsgrad des Erntegutes erzielbar ist und der manuelle Eingriff des Bedienpersonals die Ausnahme bilden soll.

Diese Aufgabe wird bei einer Aufbereitungseinrichtung der Eingangs genannten Art mit den Merkmalen des kennzeichnenden Anspruches 1 gelöst. Die Folgeansprüche 2 bis 22 betreffen besonders vorteilhafte Ausgestaltungen der Erfindung und sind ebenfalls Teil der Beschreibung.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und der Figurendarstellung zu entnehmen.

Durch das heranziehen von zuvor gesammelter Falldaten, die von einem drehmoment- oder druck- oder kraftaufnehmenden- und oder Feuchtesensor und oder Temperatursensor und oder Radarsensor und oder elektrischen Sensor und oder Abtast- Reflektometern und oder eines Laserscanners und oder manueller Eingabe an dem Bearbeitungsteil der Aufbereitungseinrichtung und von einem stellungsaufnehmenden Sensor, für den Abstand zwischen Bearbeitungsteil und Zustellteil, zur Bearbeitung des Erntegutes einer Auswerteeinheit zugeführt werden, kann durch die Auswertung der zuvor ermittelten Datensätze ein individuelles durch die Steuereinheit zur Verfügung gestelltes Steuerprogramm zur Anwendung kommen, das darüber hinaus durch Vergleich mit bereits ermittelter Datensätze eine Überprüfung auf Plausibilität durchführen kann und ggf. bei widersprüchlichen Daten den Maschinenbediener auf mögliche Fehler aufmerksam macht um damit den für ein Erntegut bestimmter Beschaffenheit notwendigen Bearbeitungsgrad der Aufbereitungseinrichtung zu steuern und zu erreichen, auch wenn die Durchsatzmengen wie zum Beispiel durch Minderwuchs häufig schwankt oder das Erntegut durch andere Eigenschaften wie zum Beispiel einem erhöhten Feuchtigkeitsgrad einer besonderen Behandlung bedarf.

Dabei werden entsprechende Stellsignale unter Berücksichtigung der gesammelten Eingangsdaten der zuvor genannten Art von der Auswerteeinheit an die Steuerungseinheit und daran anschließend an das Verstellorgan, wie beispielsweise einen elektrischen Linearmotor oder ein elektrohydraulisches Schaltventil für einen hydraulischen Stellzylinder oder dergleichen, abgegeben. Die Verstellung in den neuen Abstand zwischen dem Bearbeitungsteil und dem Zustellteil der Aufbereitungseinrichtung wird vom stellungsaufnehmenden elektrischen Sensor, der gleichzeitig auch der lineare Stellmotor als Stellorgan sein kann, in ein elektrisches Signal umgewandelt, an die elektronische Auswerteeinheit zurückgemeldet und von dieser mit bereits vorhandenen Vergleichsdaten abgeglichen.

Um Fehlbedienungen des Bedienpersonals zu verhindern, werden auch diese manuellen und nicht immer vermeidbaren Eingriffe des Maschinenbedieners durch den Abgleich mit vorhandenen und in Archiven vorgehaltenen Matrixen auf ihre Plausibilität hin überprüft und erst bei Verträglichkeit mit der vorliegenden Situation an die Steuereinrichtung übermittelt und angewendet. Ein günstiger Einbauort für die Eingangs genannte Sensorik ergibt sich aus dem Aufbau der Aufbereitungseinrichtung und deren Antrieb.

Es kann auch der druck- oder kraftaufnehmende Sensor bei einer federnden Lagerung des Zustellteiles an der Lagerung selbst angeordnet sein, um bei Überschreitung des durch die Federung vorgegebenen Druckes und der damit auf das Erntegut einwirkenden Presskraft oder der auftretenden Widerstandskraft ein druck- oder kraftabhängiges Signal für die Steuereinheit zu erhalten.

Die Anordnung des stellungsaufnehmenden Sensors in Form eines Drehwinkelgebers oder eines linearen Wegaufnehmers, insbesondere eines Linearmotors, ergibt sich ebenfalls aus der Konstruktion der Aufbereitungseinrichtung.

Die Anordnung des drehzahlaufnehmenden Sensors kann an einer beliebigen Stelle des Antriebsstranges der Aufbereitungseinrichtung erfolgen. Dieser kann auch von einem mechanischen Sensor gebildet sein, der mit einem Umsetzer gekoppelt ist, der die mechanisch aufgenommenen Messgrößen in elektrische Signale umsetzt. Eine ähnliche Anordnung eines mechanischen Sensors mit einem elektrischen Umsetzer ist auch bei Anwendung eines drehmoment- druck- oder kraftaufnehmenden Sensors möglich.

Als drehzahlaufnehmender Sensor kann auch ein schallaufnehmender Sensor verwendet werden, der an der Maschine, möglichst an Maschinenrahmen der Aufbereitungseinrichtung angebracht wird und in elektrische Signale umgewandelte Schallwerte an die Steuereinrichtung übermittelt, die ein Anhaltspunkt für die Drehzahl einer bestimmten Aufbereitungseinrichtung sind, mit denen die elektronische Steuerungseinheit programmiert ist.

Für die Programmierung eines oder mehrerer Rechner der elektronischen Steuerungseinheit kann die Änderung des Abstandes zwischen dem Bearbeitungsteil, d.h, der Aufbereitungstrommel oder -Walze, und dem Zustellteil, d.h, der Klappe, dem Rechen oder der Preßwalze oder dergleichen, von einer bestimmten Änderung des Drehmomentes oder des Druckes oder der Kraft zur Bearbeitung des Erntegutes hergeleitet sein.

Beim Anfahren und vor allem beim Wenden der Mähmaschine und somit überproportionaler Belastung muss der Abstand zwischen dem Bearbeitungsteil und dem Zustellteil der Aufbereitungseinrichtung möglichst weit oder sogar vollständig geöffnet werden.

Die Umsetzung eines elektrischen Signals, das dann vom drehzahlaufnehmenden Sensor an die Auswerteeinheit abgegeben wird, und des elektrischen Signals des stellungsaufnehmenden Sensors kann in der elektronischen Auswerteeinheit entsprechend verarbeitet werden und es können somit in der Folge die unter Berücksichtigung der ermittelten Daten optimalen Bearbeitungsprogramme an die Steuereinrichtung übermittelt werden.

Umgekehrt kann die elektronische Auswerteeinheit bei Erreichen einer oberen Grenzdrehzahl und eines geringen Drehmomentes ein Stellsignal zum Verringern des Abstandes zwischen dem Bearbeitungsteil und dem Zustellteil auf ein einprogrammiertes oder voreinstellbares Mindestmaß an die elektronische Steuerungseinheit melden.

Weiter ist es von Vorteil, wenn bei Überschreitung der Belastung oder bei Unterschreitung einer Mindestarbeitsdrehzahl der Bearbeitungseinrichtung ein Warnsignal optisch und oder akustisch gegeben wird und wenn bei anhaltender Grenzwertüber- oder -unterschreitung nach einer voreingestellten Zeit der Antrieb des Mähwerkes abgeschaltet wird.

Für die weitgehend automatisierte Anpassung der Aufbereitungseinrichtung an unterschiedliche Beanspruchungen durch die Art und Menge des Erntegutes und durch den beabsichtigten Bearbeitungsgrad desselben ist die Änderung der Programmierung über eine Buskupplung mittels eines angeschlossenen externen Rechners von Vorteil. Vorteilhafterweise ist die Möglichkeit gegeben diese Änderungen auszulesen um diese ggf. zu archivieren bzw. anderweitig zu benutzen und oder zu verwalten. Vorgenanntes kann jedoch auch über die Busleitung eines Rechners, der im Zugfahrzeug installiert ist, geschehen.

Die Übertragung der elektrischen Signale der Sensoren und oder der Stellsignale der elektronischen Steuereinheit können entweder über elektrische Zuleitungen oder drahtlos über Funk-, Infrarot- oder Ultraschall- Sende- und Empfangseinrichtungen erfolgen.

Es ist auch vereinfachend möglich, die Signale eines druckaufnehmenden Sensors und die Stellsignale der elektronischen Steuereinrichtung hydraulisch, mechanisch oder drahtlos zu übermitteln und den Zustellteil der Aufbereitungseinrichtung zumindest zwischen zwei Grenzabständen zum Bearbeitungsteil mit Hilfe der Signale eines stellungsaufnehmenden Sensors des Vertellorgans einzuregeln.

Eine Vereinfachung wird auch erreicht, wenn die Abdeckhaube der Aufbereitungseinrichtung als Zustelleinheit dient, auch wenn dadurch eine größere Masse bewegt werden muss.

Eine besonders einfache Anordnung eines druckaufnehmenden Sensors wird mittels eines Druckschalters in der Zuleitung zu einem als Verstellorgan dienenden hydraulischen Verstellzylinder hergestellt.

Durch die zusätzliche Einbindung weiterer vor Ort ermittelbarer Kennzahlen wie zum Beispiel dem Feuchtegrad mit Hilfe von kapazitiven Feuchtigkeitssensoren und unmittelbarem Abgleich der Messergebnisse mit Eichkurven sogenannten Materialkennlinien und oder der optischen Erfassung des Zustandes des Erntegutes mit Hilfe von s.g. Reflektometern bzw. Abtast- Reflektometern zur Ermittlung des Reifegrades von Biomasse und oder eines Laserscanners der durch Abtastung der Öberfläche und Erstellung eines dazugehörigem topografischen Bildes die in der Folge mit Bildmaterial aus einer verfügbaren Bildatenbank abgeglichen werden und somit eine Aussage über den Reifegrad des Erntegutes ermöglichen und oder integriertem Temperatursensor innen liegend am Gutfluß und oder als außen liegender Temperatursensor zur Ermittlung der aktuellen Außentemperatur als auch und oder einem Radarsensor zur Ermittlung einer optimierten Vorfahrgeschwindigkeit und einhergehender notwendiger Anpassung zur Optimierung des gewünschten Ernteergebnisses können zusätzliche Informationen gewonnen werden, die unmittelbar der Auswerteeinheit zur Verfügung gestellt werden und in die an die Steuereinrichtung übermittelten Bearbeitungsprogramme einfließen.

Neben diesen vor Ort gewonnenen Daten ist es ebenfalls denkbar, von extern kommende Datensätze im Zusammenspiel mit den vor Ort gewonnen Daten durch die Auswerteeinheit auswerten und von dieser interpretieren zu lassen. Spezielle Abtrocknungskurven des deutschen Wetterdienstes für die Agrarwirtschaft als auch anderer Anbieter solcher Informationsdienste können hierbei in die Gesamtschau mit einfließen, um bereits frühzeitig eine Aussage treffen zu können, ob unter den gegebene Voraussetzung überhaupt eine den Anforderungen (Aufbereitungsziel) an das Erntegut entsprechendes Ernten möglich ist.

Neben diesen Vorteilen ist es mit der Steuerungseinrichtung außerdem möglich, durch das Erzeugen von in der Landwirtschaft üblichen Kennzahlen wie Ertragsdaten und oder Mengendurchsatz und oder Feuchtigkeitsgehalt des Erntegutes daraus resultierend eine Flächenkartierung und oder Schlagkartei unter Einbeziehung eben dieser vorgenannten Datensätze zu erstellen, die darüber hinaus auch noch Informationen liefern kann zu der Bodenbeschaffenheit und oder der schlagspezifischen Nährstoffbilanz des bewirtschafteten Bodens. Durch die Einbeziehung möglichst umfangreicher und qualitativ hochwertiger Datensätze vorgenannter Art und deren Auswertung kann optional eine Kartierung generiert werden, die beispielsweise auch zur Optimierung der Abfuhrkette des Erntegutes aber auch als Indikator für vorzunehmende Düngungsmaßnahmen auf der jeweiligen Agrarfläche dienen kann.

Die Erfindung wird an Hand der Zeichnung besonders vorteilhafter Ausführungsformen der Erfindung beschrieben. Es zeigt:
- Fig. 1: ein Blockschaltbild der Regelanordnung mit Sensoren, Verstellorganen, Warneinrichtungen, Zuleitungen und elektronischer Regeleinrichtung, schematisch;
- Fig. 2: eine Aufbereitungseinrichtung eines Frontmähwerkes, in Seitenansicht, geschnitten, schematisch;
- Fig. 3: eine Aufbereitungseinrichtung mit zwei Aufbereitungswalzen an einem gezogen oder heckangebauten Mähwerk, in Seitenansicht, geschnitten, schematisch;
- Fig.4: die Antriebsanordnung einer Aufbereitungseinrichtung nach Fig. 1, teilweise, geschnitten, schematisch;

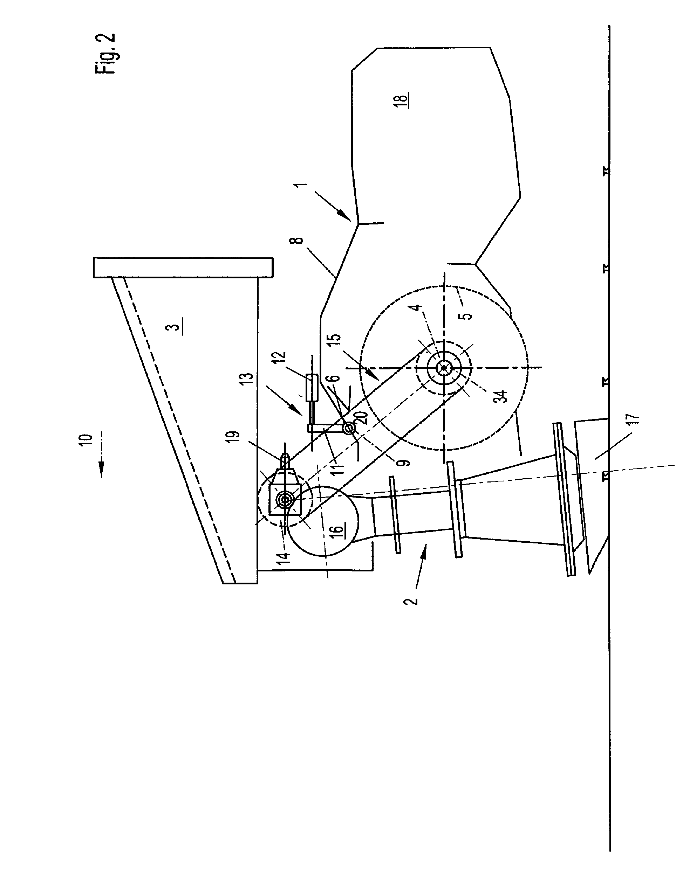

Ein an dem Fronttragrahmen 3 angebautes Rotationsmähwerk 2 liegt mit dem Mähbalken 17 auf dem Boden auf und wird in Fahrtrichtung 10 von einem Antriebsfahrzeug, an dem der Fronttragrahmen 3 angebaut ist, geschoben (Fig. 2).

Das Rotationsmähwerk 1 ist mit einem oben liegenden Mähwerksgetriebegehäuse 16 versehen, an dem ein Eingangsgetriebe 14 befestigt ist, über dessen Gelenkwellenanschluss 19 der Antrieb vom Antriebsfahrzeug her erfolgt. Der Maschinenrahmen 36 der Aufbereitungseinrichtung 1 ist am Rotationsmähwerk 2 befestigt und trägt die Lagerungen des Bearbeitungsteiles 4 und des Zustellteiles 6 oder 7, die unmittelbar hinter dem Rotationsmähwerk 2, im Erntegutstrom liegend, angeordnet sind.

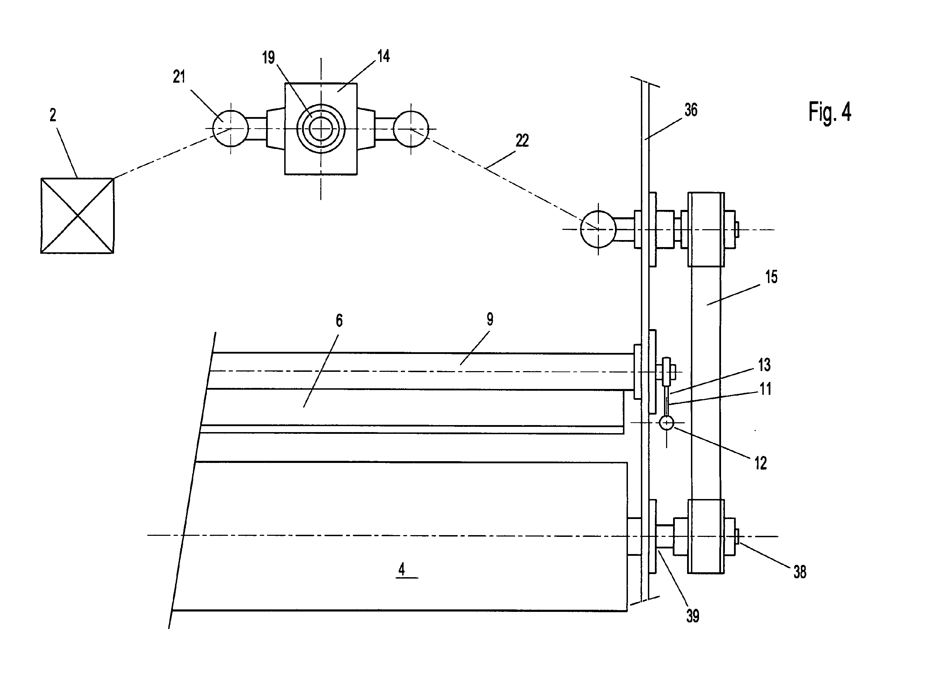

Bei der in Fig. 2 dargestellten Aufbereitungseinrichtung 1 besteht der Bearbeitungsteil 4 aus einer Aufbereitungs-Trommel oder Walze, die waagrecht und im rechten Winkel zur Fahrtrichtung 10 und zum Mähwerksbalken 17 ausgerichtet, antreibbar gelagert ist. Der Antrieb des Bearbeitungsteiles 4 von der Antriebsseite 38 her über einen Antrieb 15, welcher den Bearbeitungsteil 4 nach vorne zu, über Kopf um die Welle 22 rotierend, antreibt, wobei der Flugkreis 5 der Bearbeitungswerkzeuge dargestellt ist. Der Antrieb 15 besteht aus einem Riemengetriebe mit Abtriebs- und Antriebsrad und wird von einer Antriebswelle 22 vom Eingangsgetriebe 14 aus angetrieben, dessen zweiter Ausgang mit einer Antriebswelle 21 mit dem Rotationsmähwerk 2 verbunden ist (Fig. 4).

Oberhalb des Bearbeitungsteiles 4 ist, leicht nach vorne versetzt, über dessen Breite ein Zustellteil 6 an einer Schwenkachse 9 beiderseits an der Abdeckhaube 8 gelagert, die seitlich herabgezogen ist und nach hinten zu mit Führungsfahnen 18 für die Leitung des bearbeiteten Erntegutstromes versehen ist.

Der Zustellteil 6 ist als Klappe oder Rechen ausgebildet und wird mit einer Verstellvorrichtung 13 über deren Stellhebel 11 in seinem Abstand 20 zum Bearbeitungsteil 4 verstellt, der von einem Verstellorgan 12, das ein elektrischer Linearmotor oder ein hydraulischer Stellzylinder sein kann, betätigt wird.

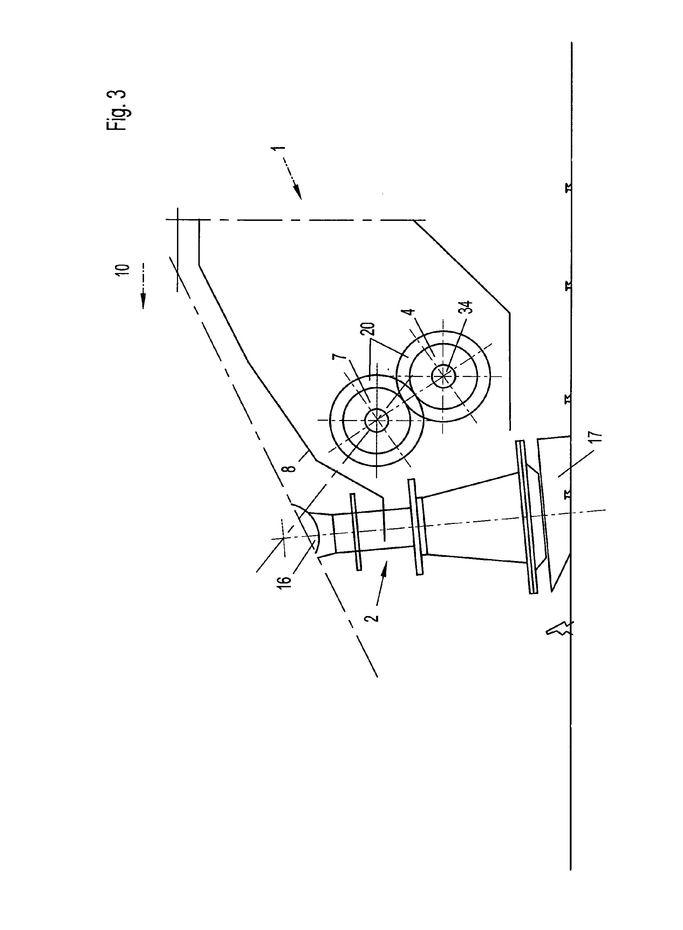

In Fig. 3 ist eine Variante einer Aufbereitungseinrichtung an einem gezogenen Rotationsmähwerk 2 dargestellt. Der Bearbeitungsteil 6 besteht aus einer angetriebenen Aufbereitungswalze, in einer Anordnung wie sie schon in Fig. 2 beschrieben wurde, und läuft mit einem Zustellteil 7 zusammen, der als drehbar gelagerte und parallel zum Bearbeitungsteil 4 ausgerichtete Walze ausgebildet ist, die an einer Verstellvorrichtung 13, in Form von, um eine Schwenkachse 9 höhenverschwenkbar gelagert ist. Über ein auf die Verstellvorrichtung 13 wirkendes Verstellorgan wird der Abstand 20 zwischen dem Bearbeitungsteil 4 und dem Zustellteil 7 eingestellt. In der Grundstellung laufen die Walzen des Bearbeitungsteiles 4 und des Zustellteiles 7 ineinander, wobei die Walze des Zustellteiles 7 unter der Kraft einer nicht dargestellten Feder gegen die Walze des Bearbeitungsteiles 4 gehalten wird. Nach oben und seitlich zu ist die Aufbereitungseinrichtung von einer Abdeckhaube 8 umgeben.

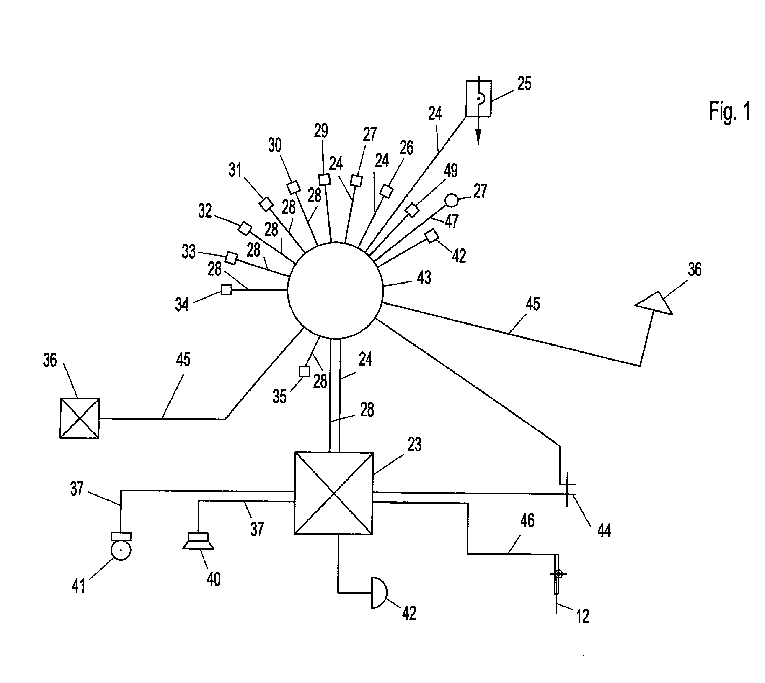

Im Blockschaltbild Fig. 1 ist eine elektronische Steuereinrichtung 23 wiedergegeben, die als programmierbare elektronische Steuereinrichtung ausgebildet ist und über eine elektrische Zuleitungen 24 mit einer elektronischen Auswerteeinheit 43 und in der Folge über Zuleitungen 24 mit einem drehmoment- oder druck oder kraftaufnehmenden Sensor 25 und mit einem drehzahlaufnehmenden Sensor 26, sowie mit einem stellungsaufnehmenden Sensor 27, in Form eines Drehwinkelgebers, verbunden ist. Darüber hinaus ist v.g. programmierbare elektronische Steuereinrichtung mit Zuleitungen 28 mit einer elektronischen Auswerteeinheit 43 verbunden die wiederum mit einer Anzahl von Sensoren 29, 30, 31, 32, 33, 34 über Zuleitungen 24 verbunden sind die den Feuchtegrad des Erntegutes, die Temperatur des Erntegutes, die Außentemperatur, die Einstellung des Gegenwerkzeuges am Aufbereiter, die Vorfahrgeschwindigkeit des Zugfahrzeuges ermitteln. Darüber hinaus ist die elektronische Auswerteeinheit 43 mit einem Laserscanner 33 verbunden welcher es ermöglicht topografische Daten zu erfassen und die erfassten Daten an die elektronische Auswerteeinheit 43 zu übermitteln.

Die elektronische Auswerteeinheit 43 verfügt über eine Buskupplung 42 zum Anschluss an einen gesonderten, externen Rechner oder an das Bussystem und den Rechner des Zugfahrzeuges oder ein Bedienpanel um den automatisierten Prozess ablaufen zu lassen und ggf. dem Maschinenbediener die Möglichkeit zu geben korrigierend in den Prozess eingreifen zu können. Schließlich ist noch eine elektrische Spannungsversorgung 44 über eine Kupplung anschließbar mit der die Versorgung der elektronischen Steuereinrichtung 23 sowie der Auswerteeinheit 43 gewährleistet wird. Außerdem wird die elektronische Steuereinrichtung 23 zusätzlich zu den Eingangs genannten Sensoren 29, 30, 31, 32, 33, 34 über eine weitere Zuleitung 45 von externen Diensten über eine Modemverbindung 36 mit für das Aufbereitungsergebnis relevanten Datensätzen versorgt. Diese können spezielle über das Internet zur Verfügung gestellte Informationen sein, die zusätzlich zu den bereits gewonnenen Datensätzen an die elektronische Auswerteeinheit 43 gesandt werden und nach erfolgter Auswertung an die ausführende elektronische Steuereinrichtung 23 geschickt werden. Außerdem ist es denkbar den einzelnen der Auswerteeinheit 43 zur Verfügung gestellten Datensätzen eine unterschiedliche Gewichtung zu geben um besonders wichtige das Ernteergebnis beeinflussende Faktoren stärker zu berücksichtigen und somit ein für die jeweilige Situation optimales Programm durch die elektronische Steuereinrichtung 23 zur Anwendung zu bringen um dadurch Störungen beim Durchsatz zu großer Erntegutmengen, zu geringer Drehzahl oder anderen besonderen Betriebszuständen, auch wenn sie durch Fehlbedienung hervorgerufen sind, zu mindern bzw. ganz zu vermeiden.Eine zusätzliche Zuleitung 46 verbindet die elektronische Steuereinrichtung 23 mit einem Verstellorgan 12, das als Linearmotor ausgebildet sein kann.

Als Weiteres ist die elektronische Steuereinrichtung 23 über die Zuleitung 37 mit einer Warnleuchte 41 und einer Warnhupe 40 verbunden.

Die Sensoren 25, 26, 27, 29, 30, 31, 32, 33, 34 geben elektrische Signale an die elektronische Steuereinrichtung 23 ab, die nach der Größe des Drehmomentes oder der Kraft oder des Druckes und der Drehzahl und Feuchtegrad und oder Temperatur des Ernteguts und oder der Fahrgeschwindigkeit des Zugfahrzeuges an der Aufbereitungseinrichtung 1 die Einstellung des Spaltes 20 zwischen dem Bearbeitungsteil 4 und dem Zustellteil 6, 7 über elektrische Stellsignale mit dem Verstellorgan 12 steuert, wobei jeder neu eingestellte Abstand vom stellungsaufnehmenden Sensor 27 an die elektronische Steuereinheit 23 zurück gemeldet wird. Bei länger anhaltenden Überschreitungen der in die elektronische Steuereinheit 23 einprogrammierten Grenzwerte gibt diese elektrische Signale an die Warn leuchte 41 und die Warnhupe 40 ab, damit eine automatisierte bzw. vom Bedienpersonal vorzunehmende Notabschaltung vorgenommen werden kann.

### Legende

- 1: Aufbereitungseinrichtung
- 2: Rotationsmähwerk
- 3: Fronttragrahmen der Mähmaschine
- 4: Bearbeitungsteil, als liegende Walze ausgebildet
- 5: Flugkreis der Aufbereitungswerkzeuge
- 6: Zustellteil, als Klappe oder Rechen ausgebildet
- 7: Zustellteil, als drehbare Zustellwalze ausgebildet
- 8: Abdeckhaube
- 9: Schwenkachse des Zustellteiles 6
- 10: Fahrtrichtung
- 11: Zustellhebel des Zustellteiles 6
- 12: Verstellorgan, als elektrischer Linearmotor oder als hydraulischer Stelllzylinder ausgebildet, der Verstellvorrichtung 13
- 13: Verstellvorrichtung
- 14: Eingangsgetriebe
- 15: Antrieb der Aufbereitungseinrichtung 1
- 16: Mähwerksgetriebegehäuse
- 17: Mähwerksbalken
- 18: Führungsfahne
- 19: Gelenkwellenanschluss des Eingangsgetriebes
- 20: Abstand zwischen Bearbeitungsteil 4 und Zustellteil 6,7
- 21: Antriebswelle für das Rotationsmähwerk 2
- 22: Antriebswelle für die Aufbereitungseinrichtung 1
- 23: elektronische Steuereinrichtung
- 24: elektrische Zuleitung der drehmoment- oder druck- oder kraftaufnehmenden Sensoren 25, 26, 27 sowie den Sensoren 29, 30, 31, 32, 33, 34
- 25: drehmoment- oder druck- oder kraftaufnehmender Sensor
- 26: drehzahlaufnehmender Sensor
- 27: lage- und stellungsaufnehmender Sensor
- 28: Zuleitung für Sensoren 29, 30, 31, 32, 33, 34
- 29: Sensor Erntegut Temperatur
- 30: Sensor Erntegut Feuchte
- 31: Sensor Gegenwerkzeug Einstellung
- 32: Reflektometer
- 33: Laserscanner
- 34: außenliegender Temperatursensor
- 35: Radarsensor
- 36: Sende- und Empfangseinheit
- 37: Modemverbindung
- 38: Maschinenrahmen der Aufbereitungsmaschine 1
- 39: Welle des Bearbeitungsteiles 4
- 40: Warnhupe
- 41: Warnleuchte
- 42: Buskupplung
- 43: elektronische Auswerteeinheit
- 44: elektrische Spannungsversorgung der Steuer und Auswerteeinheit
- 45: elektrische Zuleitung zur Sende und Empfangseinheit
- 46: elektrische Zuleitung Verstellorgan
- 47: elektrische Zuleitung zu lage- und stellungsaufnehmenden Sensor
- 48: elektrische Zuleitung zu druck- oder kraftaufnehmenden Sensor

## Patentansprüche

1. Aufbereitungseinrichtung für eine landwirtschaftliche Bearbeitungsmaschine, insbesondere für eine Mähmaschine mit einem Rotationsmähwerk, dieser nachgeordnet , welche Bearbeitungseinrichtung von einem Eingangsgetriebe, insbesondere mit gesonderter Antriebswelle antreibbar ist und im wesentlichen einen quer zur Fahrtrichtung liegend angeordneten, rotierend angetriebenen Bearbeitungsteil, insbesondere einer ortsfest gelagerten Aufbereitungstrommel oder Aufbereitungswalze, mit Bearbeitungswerkzeugen ausgebildet, einem zu diesem veränderbaren Abstand fest einstellbaren Zustellteil, insbesondere als Klappe, Rechen oder drehbar gelagerte Zustellwalze ausgebildet, und eine im wesentlichen obere und seitliche Abdeckhaube umfasst sowie eine Konfiguration der Aufbereitungseinrichtung in Bezug auf den tatsächlich gewünschten Bearbeitungsgrad des Ernteguts ermöglicht, **dadurch gekennzeichnet, dass** der Zustellteil (6, 7) im Abstand (20) zum rotierenden Bearbeitungsteil (4) mit einer Verstellvorrichtung (13) veränderbar einstellbar ist, die über eine elektronische Steuereinrichtung (23) eingestellt wird, welche die, insbesondere über elektrische Zuleitungen (47 oder und 48) oder drahtlos über die einer Sende- und oder Empfangseinheit zugeführten Signale, die von wenigstens einem drehmoment- oder druck- oder kraftaufnehmenden Sensor (25), der im Antriebsbereich des rotierenden Bearbeitungsteiles (4) angeordnet ist und von einem lage- und stellungsaufnehmenden Sensor (27) für die Stellung des Zustellteiles (6 oder 7) in Bezug auf den rotierenden Bearbeitungsteil (4) abgegeben werden, aufnimmt, verarbeitet und Stellsignale an die Verstellvorrichtung (13) des Zustellteiles (6 oder 7) in Bezug auf den rotierenden Bearbeitungsteil (4) abgegeben werden, aufnimmt, verarbeitet und über den lage- und stellungsaufnehmenden Sensor (27) gewonnene Messergebnisse in Stellsignale umwandelt und an die Verstellvorrichtung (13) des Zustellteiles (6 oder 7) zur Verstellung, insbesondere über die elektronische Zuleitung (47) oder drahtlos über eine Sende- und Empfangseinheit (29) abgibt sowie darüber hinaus weitere Zuleitungen (28) zu den Sensoren für Gutfeuchte (30), Guttemperatur (29), Reflektometern (32), Laserscanner (33), Außentemperatur (34) sowie einem Radarsensor (35) zur Ermittlung der Fahrgeschwindigkeit des Zugfahrzeuges umfasst und über eine weitere Zuleitung (45) eine Verbindung zu einer weiteren Sende und Empfangseinheit (36) aufbauen kann um weitere für das Ernteergebnis relevante Datensätze generieren zu können um in der Folge das Ernteergebnis zu verbessern.

2. Aufbereitungseinrichtung nach Anspruch 1, **dadurch gekennzeichnet, dass** ein drehzahlaufnehmender Sensor (26) in dem mit dem Bearbeitungsteil (4) der Bearbeitungseinrichtung (1) zwangsgekoppelten Teil des Antriebsstranges, insbesondere an der Abtriebsseite (38) des Antriebes (15) der Aufbereitungseinrichtung (1) und vorzugsweise an der Welle (39) des Bearbeitungsteiles (4) angebracht ist oder, dass ein schallaufnehmender Sensor an der Mähmaschine, insbesondere im Bereich oder am Maschinenrahmen (38) der Aufbereitungsmaschine angebracht ist der Signale insbesondere über elektrische Zuleitungen oder drahtlos über eine Sende und Empfangseinheit (23) an die elektronische Steuereinrichtung weiterleitet.
Aufbereitungseinrichtung nach Anspruch 1, **dadurch gekennzeichnet, dass** der drehmomentaufnehmende Sensor (26) im Antriebsweg der Aufbereitungseinrichtung (1), insbesondere an der Welle (39) des Bearbeitungsteiles (4) angebracht ist oder, dass ein drehmoment- oder druck- oder kraftaufnehmender Sensor (25) in den Antriebsweg der Aufbereitungseinrichtung (1), insbesondere in dessen Antrieb (15) eingebaut ist.

3. Aufbereitungseinrichtung nach Anspruch 1 oder 3, **dadurch gekennzeichnet, dass** ein druck- oder kraftaufnehmender Sensor (25) zwischen dem, insbesonders gegen eine an der Verstellvorrichtung (13) fest gelagerten Druckfeder, über einen vorgegebenen Wegbereich verschwenkbaren Zustellteil (6) und einem festen Teil der Verstellvorrichtung (13) angeordnet ist, der bei Überschreitung eines, vorzugsweise voreingestellten, Gegendruckes am Zustellteil oder an der Druckfeder ein Signal, vorzugsweise über die elektrische Zuleitung (24) oder drahtlos über eine Sende oder Empfangseinheit, an die elektronische Auswerteeinheit (43) abgibt.

4. Aufbereitungseinrichtung nach Anspruch 1, **dadurch gekennzeichnet, dass** der lage- und stellungsaufnehmende Sensor (27) als Drehwinkelgeber ausgebildet ist, der vorzugsweise an der Schwenkachse (9) des, als Klappe oder Rechen oder dergl. oder als an Lenkern verschwenkbare Zustellwalze ausgebildeten, Zustellteiles (6, 7) angebracht ist oder als linearaufnehmender Sensor an der Verstellvorrichtung (13) insbesondere an dem, vorzugsweise als Hydraulischer Stellzylinder, ausgebildeten Verstellorgan (12) angebracht ist oder von dem als elektrischem Linearmotor ausgebildeten Verstellorgan (12) selbst gebildet wird.

5. Aufbereitungseinrichtung nach einem der vorhergehenden Ansprüche, **dadurch gekennzeichnet, dass** die elektronische Steuereinheit (23) Stellsignale, vorzugsweise über die elektrische Zuleitung (45) oder drahtlos über eine Sende- und Empfangseinheit (36), an die Verstellvorrichtung (13) für die Betätigung des Verstellorgans (12) zur Vergrößerung des Abstandes (20) zwischen dem rotierenden Bearbeitungsteil (4) und dem Zustellteil (6 oder 7) abgibt, wenn der drehmoment- oder druck- oder kraftaufnehmende Sensor (25) Signale über die Vergrößerung des einwirkenden Drehmomentes oder des Druckes oder der Kraft an die elektronische Steuereinrichtung (23), insbesondere über die elektrische Zuleitung (46) oder drahtlos über eine Sende- und Empfangsanordnung (36) abgibt, die die Überschreitung eines, in die elektronische Auswerteeinheit (43) einprogrammierten Sollwertes für einen bestimmten Abstand (20) anzeigt und umkehrt, wobei der stellungsaufnehmende Sensor (12) die Signale über die veränderte Stellung des Zustellteiles (6 oder 7) an die Sende und Empfangseinheit (36), insbesondere über die elektrische Zuleitung (46) oder drahtlos über eine Sende- und Empfangsanordnung, übermittelt, die von dieser mit dem Drehmoment- Druck- oder Kraftsollwert für die veränderte Stellung des Zustellteiles (6, 7) verglichen werden und die bei Abweichung vom Sollwert über ein einprogrammiertes Maß hinaus weitere Stellsignale abgibt.

6. Aufbereitungseinrichtung nach einem der vorhergehenden Ansprüche, **dadurch gekennzeichnet, das** die elektronische Steuereinrichtung (23) Stellsignale, insbesondere über die elektrische Zuleitung (46) oder drahtlos über eine Sende- und Empfangseinheit (36), an die Verstellvorrichtung (13) zur Betätigung des Verstellorgans (12) für die Vergrößerung des Abstandes (20) zwischen dem rotierenden Bearbeitungsteil (4) und dem Zustellteil (6 und 7) abgibt, wenn der drehzahlaufnehmende elektrische Sensor (25) Signale über die Verringerung der Drehzahl des Bearbeitungsteiles (4), insbesondere über die elektrische Zuleitung (24) oder drahtlos über eine Sende- und Empfangseinheit (36), an die elektronische Steuereinrichtung (23) abgibt und bei Abfall der Drehzahl unter einen, in den Rechner der elektronischen Steuereinrichtung (23) einprogrammierten, Grenzwert für den Abstand (20) zwischen dem Bearbeitungsteil (4) und dem Zustellteil (6 oder 7) diesen vergrößert und bei weiterem Verbleiben oder bei Absinken der Drehzahl unter den Grenzwert auf das größte, einprogrammierte Maß einstellt und bei Überschreitung dieses Grenzwertes der Drehzahl nach oben, wieder die vorherigen Abstände (20) für bestimmte Sollwerte der Drehzahl und des Drehmoments oder des Druckes oder der Kraft einstellt, wobei der lage- und stellungsaufnehmende Sensor (27) Signale über die Stellung des Zustellteiles (6 oder 7), insbesondere über die elektrische Zuleitung (24) oder drahtlos über eine Sende- und Empfangseinheit (36) an die elektronische Steuereinrichtung (23) für den Vergleich mit den entsprechenden Sollwerten übermittelt.

7. Aufbereitungseinrichtung nach einem der vorhergehenden Ansprüche, **dadurch gekennzeichnet, dass** die elektronische Steuereinrichtung (23) bei Überschreiten eines programmierten Drehmoment- oder Druck- oder Kraftsollwertes für einen bestimmten Abstand (20) zwischen dem Bearbeitungsteil (4) und dem Zustellteil (6 oder 7) oder bei Unterschreiten einer programmierten Arbeitsdrehzahl, über eine einprogrammierte Zeitdauer hinaus, insbesondere über die elektrischen Zuleitungen (37) oder drahtlos über eine Sende- und Empfangseinheit (36), ein Signal zur Betätigung einer Warnleuchte (40) und oder einer Warnhupe (41) an die elektronische Steuereinrichtung abgibt und oder nach einem weiteren, vorprogrammierten Zeitraum in gleicher Weise ein Signal zum Unterbrechen des Antriebes für die Mähmaschine und für die Bearbeitungseinrichtung (1) durch Schaltung einer Kupplung abgibt.

8. Aufbereitungseinrichtung nach einem der vorhergehenden Ansprüche, **dadurch gekennzeichnet , dass** die elektronische Steuereinrichtung (23) mit einer Buskupplung (42) oder mit einer Übermittlungseinrichtung, insbesondere einer drahtlosen Sende- und Empfangseinrichtung (36), für den Anschluss an das Bussystem eines externen Rechners, vorzugsweise an den Rechner des Zugfahrzeuges, versehen ist oder dem externen Rechner zugeordnet ist, wobei die Programmierung des Rechners der Steuereinrichtung (23) über den externen Rechner, insbesondere mit einem an die Maschinencharakteristik und die Ernteguteigenschaften angepassten Steuerungsprogramm oder über einen Zugangsslot einer elektronischen Lese- und vorzugsweise auch Schreibeinrichtung mit einer programmierbaren Speicher- oder Rechnerkarte erfolgt und dass gegebenenfalls im Rechner der Steuereinheit (23) gespeicherte Arbeitsdaten vom externen Rechner aus abrufbar, speicherbar und oder, vorzugsweise auf einem Display, anzeigbar sind.

9. Aufbereitungseinrichtung für eine landwirtschaftliche Bearbeitungsmaschine, insbesondere für eine Mähmaschine mit einem Rotationsmähwerk, dieser nachgeordnet, welche Bearbeitungseinrichtung von einem Eingangsgetriebe, insbesondere mit gesonderter Antriebswelle antreibbar ist und im wesentlichen einen quer zur Fahrtrichtung liegend angeordneten, rotierend angetriebenen Bearbeitungsteil, insbesondere ortsfest gelagert und mit einem Bearbeitungswerkzeug ausgebildet, einen zu diesem in einem veränderbaren Abstand fest einstellbaren Zustellteil, insbesondere als Klappe, Rechen oder drehbar gelagerten Zustellwalze ausgebildet, und eine im wesentlichen obere und seitliche Abdeckhaube umfasst, **dadurch gekennzeichnet, dass** der Zustellteil (6,7) im Abstand (20) zum rotierenden Bearbeitungsteil (4) mit einer Verstellvorrichtung (13) veränderbar einstellbar ist und ein druckaufnehmender Sensor (24) mit einer Übertragungseinrichtung gekoppelt ist, die insbesondere hydraulisch oder elektrisch über Leitungen oder drahtlos über eine Sende- und Empfangseinheit eine Steuereinheit, insbesondere ein hydraulisches oder ein elektrohydraulisches Steuerventil oder ein elektrisches Steuerrelais oder dergl. für ein Verstellorgan (12), vorzugsweise einen Hydraulischen Stellzylinder oder einen elektrischen Verstellmotor zur Veränderung des Abstandes (20) zwischen dem Zustellteil (6,7) und dem Bearbeitungsteil (4), zwischen wenigstens zwei Abstandsgrößen , betätigt, die von einem stellungsaufnehmenden Sensor (27) über die Stellung des Verstellorganes (12) ermittelt und an die elektronische Auswerteeinheit (43) übermittelt werden.

10. Aufbereitungseinrichtung nach einem der vorhergehenden Ansprüche **dadurch gekennzeichnet, dass** der Zustellteil (6) von der Abdeckhaube (8) gebildet ist, die beweglich, insbesondere um einen Schwenkachse verschwenkbar, am Maschinenrahmen (38) der Aufbereitungseinrichtung (1) gelagert ist.

11. Aufbereitungseinrichtung nach einem der vorhergehenden Ansprüche, **dadurch gekennzeichnet, dass** der druckaufnehmende Sensor (25) in der Zuleitung des als Verstellorgan (12) dienenden hydraulischen Stellzylinders, auf der Druckseite für das Vergrößern des Abstandes (20) zwischen dem Zustellteil (6, 7) und dem Bearbeitungsteil (4) eingesetzt ist.

12. Aufbereitungseinrichtung nach Anspruch 1 **dadurch gekennzeichnet, dass** die elektronische Auswerteeinheit (43) autonom auf von extern angebotene Datenquellen und Matrixe zugreifen kann und die gewonnen Erkenntnisse nach Relevanz für den Aufbereitungsgrad geklastert werden und in der Folge Anweisungen an die elektronische Steuereinrichtung übermittelt werden, die damit wiederum in der Lage ist eine Veränderung des Abstandes (20) zwischen dem Zustellteil (6, 7) und dem Bearbeitungsteil (4), zu bewirken.

13. Aufbereitungseinrichtung nach einem der vorhergehenden Ansprüche, **dadurch gekennzeichnet, dass** die Messergebnisse des kapazitiven Feuchtigkeitssensor (30) mit sogenannten Kennlinien bzw. Eichkurven abgeglichen werden und die hieraus gewonnenen Ergebnisse unmittelbar an die elektronische Steuereinrichtung übermittelt die damit wiederum in der Lage ist eine Veränderung des Abstandes (20) zwischen dem Zustellteil (6, 7) und dem Bearbeitungsteil (4), zu bewirken.

14. Aufbereitungseinrichtung nach Anspruch 1 **dadurch gekennzeichnet, das**s die von der elektronischen Auswerteeinheit (43) autonom herangezogenen Datensätze auf Plausibilität hin überprüft werden und bei Unverträglichkeit mit den Anforderungen an das Erntegut den Maschinenbediener hierüber informieren und ebenfalls zeitgleich Vorschläge unterbreitet wie mit den veränderten Bedingungen in Bezug auf den Aufbereitungsgrades des Erntegutes optimal umzugehen ist und damit wiederum in der Lage unter Berücksichtigung der Parameter eine Veränderung des Abstandes (20) zwischen dem Zustellteil (6, 7) und dem Bearbeitungsteil (4), zu bewirken.

15. Aufbereitungseinrichtung nach einem der vorhergehenden Ansprüche, **dadurch gekennzeichnet, dass** eine optische Erfassung des Reifegrades des Erntegutes mit Hilfe eines Reflektometers (32) erfolgt der einen optischen Abgleich mit in einer Datenbank hinterlegtem Bildmaterial zulässt und in der Folge Anweisungen an die elektronische Steuereinrichtung (23) übermittelt die damit wiederum in der Lage ist, eine Veränderung des Abstandes (20) zwischen dem Zustellteil (6, 7) und dem Bearbeitungsteil (4), zu bewirken.

16. Aufbereitungseinrichtung nach einem der vorhergehenden Ansprüche, **dadurch gekennzeichnet, dass** eine topografische Erfassung der Oberflächenbeschaffenheit des Erntegutes mit Hilfe eines Laserscanners (33) erfolgt der wiederum einen optischen Abgleich mit in einer Datenbank hinterlegtem topografischem Vergleichsmaterial ermöglicht und in der Folge Anweisungen an die elektronische Steuereinrichtung (23) übermittelt die damit wiederum in der Lage ist eine Veränderung des Abstandes (20) zwischen dem Zustellteil (6, 7) und dem Bearbeitungsteil (4), zu bewirken.

17. Aufbereitungseinrichtung nach Anspruch 1 **dadurch gekennzeichnet, dass** die vor Ort und von externen Datenquellen kommenden Daten, in einer elektronischen Auswerteeinheit (43) gesammelt, Ihre Abhängigkeit voneinander überprüft werden, notwendige Verknüpfungen automatisiert hergestellt werden und die Bearbeitungsprogramme in Abhängigkeit der Wichtigkeit für die Erzeugung des gewünschten Reifegrades des Erntegutes an die Steuereinrichtung (23) übermittelt werden die damit wiederum in der Lage ist eine Veränderung des Abstandes (20) zwischen dem Zustellteil (6, 7) und dem Bearbeitungsteil (4), zu bewirken.

18. Aufbereitungseinrichtung nach Anspruch 1 **dadurch gekennzeichnet, dass** durch den Einsatz eines Radarsensors (35) eine Erfassung der Vorfahrgeschwindigkeit erfolgt, dessen Ergebnisse wiederum der elektronischen Auswerteeinheit (43) zur Verfügung gestellt wird und die in der Folge in Abhängigkeit der gewünschten Zuführmenge des Erntegutes hin zur Aufbereitungseinrichtung den Traktor automatisiert beschleunigt bzw. entschleunigt.

19. Aufbereitungseinrichtung nach Anspruch 1 **dadurch gekennzeichnet, dass** durch den Einsatz eines innenliegenden Temperatursensors (29) eine Erfassung der Temperatur des Erntegutes erfolgt dessen Ergebnisse wiederum der Auswerteeinheit (43) zur Verfügung gestellt werden und die diese im Zusammenspiel mit der Erfassung des Feuchtegrades des Erntegutes mit prognostizierten Abtrocknungskurven durch die elektronische Auswerteeinheit (43) auswertet und die Ergebnisse an die elektronische Steuereinrichtung (23) übermittelt werden, die damit wiederum in der Lage ist eine Veränderung des Abstandes (20) zwischen dem Zustellteil (6, 7) und dem Bearbeitungsteil (4), zu bewirken.

20. Aufbereitungseinrichtung nach Anspruch 1 d**adurch gekennzeichnet, dass** durch den Einsatz eines außenliegenden Temperatursensors (34) eine Erfassung der Umgebungstemperatur erfolgt, dessen Ergebnis wiederum der Auswerteeinheit (43) zur Verfügung gestellt wird und die diese im Zusammenspiel mit der Erfassung des Feuchtegrades des Erntegutes mit prognostizierten Abtrocknungskurven durch die Auswerteeinheit (43) auswertet und die Ergebnisse an die Steuereinrichtung (23) übermittelt werden, die damit wiederum in der Lage ist eine Veränderung des Abstandes (20) zwischen dem Zustellteil (6, 7) und dem Bearbeitungsteil (4), zu bewirken.

21. Aufbereitungseinrichtung nach Anspruch 1 **dadurch gekennzeichnet, dass** die von externen Datenquellen stammenden Daten als auch die vor Ort gesammelten Daten der elektronischen Auswerteeinheit (43) zur Verfügung gestellt werden und diese ausgewerteten Daten eine Veränderung des Abstandes (20) zwischen dem Zustellteil (6, 7) und dem Bearbeitungsteil (4) bewirken, und die dadurch vorgenommene Anpassung der Aufbereitungseinrichtung (1) in eine zu erzeugende elektronische Schlagkartei eingetragen werden kann.

22. Aufbereitungseinrichtung nach Anspruch 1 **dadurch gekennzeichnet, dass** durch das detektieren des Feuchtegrades des Erntegutes in der Aufbereitungseinrichtung (1) und die Auswertung der Daten in der elektronischen Auswerteeinheit (43) Rückschlüsse auf das Volumen und somit vorausschauend Vorkehrungen zur Abfuhr des Erntegutes getroffen werden können.

23. Aufbereitungseinrichtung nach Anspruch 1 **dadurch gekennzeichnet, dass** eine optische Erfassung des Zustandes des Erntegutes mit Hilfe von s.g. Reflektometern bzw. Abtast- Reflektometern (32) zur Ermittlung des Reifegrades des Erntegutes durch die elektronische Auswerteeinheit (43) erfolgt und die daraus resultierenden Vorgaben an die Steuereinrichtung (23) übermittelt werden, die damit wiederum in der Lage ist eine Veränderung des Abstandes (20) zwischen dem Zustellteil (6, 7) und dem Bearbeitungsteil (4), zu bewirken um unmittelbar Einfluss auf die Qualität des Erntegutes zu nehmen.
